(19) Europäisches Patentamt
European Patent Office
Office européen des brevets

(11) **EP 4 087 254 A1**

(12) **EUROPEAN PATENT APPLICATION**
published in accordance with Art. 153(4) EPC

(43) Date of publication:
**09.11.2022 Bulletin 2022/45**

(21) Application number: **19958408.7**

(22) Date of filing: **30.12.2019**

(51) International Patent Classification (IPC):
**H04N 19/52** (2014.01)

(52) Cooperative Patent Classification (CPC):
**H04N 19/52**

(86) International application number:
**PCT/CN2019/130131**

(87) International publication number:
**WO 2021/134306 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **WAN, Shuai**
  **Dongguan, Guangdong 523860 (CN)**

• **XUE, Yi**
  **Dongguan, Guangdong 523860 (CN)**
• **MA, Yanzhuo**
  **Dongguan, Guangdong 523860 (CN)**
• **HUO, Junyan**
  **Dongguan, Guangdong 523860 (CN)**
• **YANG, Fuzheng**
  **Dongguan, Guangdong 523860 (CN)**

(74) Representative: **Taor, Simon Edward William
Venner Shipley LLP
200 Aldersgate
London EC1A 4HD (GB)**

(54) **INTER-FRAME PREDICTION METHOD, ENCODER, DECODER AND STORAGE MEDIUM**

(57) An inter-frame prediction method and apparatus, and related devices and a storage medium. The method comprises: determining a first motion vector and a second motion vector of a current block, wherein the first motion vector is a forward motion vector of the current block, and the second motion vector is a backward motion vector of the current block; on the basis of the first motion vector and the second motion vector, determining whether a set condition is satisfied, and obtaining a determination result; setting the value of a BDOF flag according to the determination result; and determining, on the basis of the value of the BDOF flag, an inter-frame prediction value of the current block or at least one sub-block in the current block.

```
┌─────────────────────────────────────────────┐
│ Determining a first MV and a second MV of    │── 401
│ a current block                               │
└─────────────────────────────────────────────┘
                      │
                      ▼
┌─────────────────────────────────────────────┐
│ Determining whether a set condition is        │── 402
│ satisfied based on the first MV and the       │
│ second MV to obtain a determination result    │
└─────────────────────────────────────────────┘
                      │
                      ▼
┌─────────────────────────────────────────────┐
│ Setting a value of a BDOF flag according to   │── 403
│ the determination result                      │
└─────────────────────────────────────────────┘
                      │
                      ▼
┌─────────────────────────────────────────────┐
│ Determining an inter prediction value of the  │── 404
│ current block or at least one sub-block in     │
│ the current block based on the value of the    │
│ BDOF flag                                      │
└─────────────────────────────────────────────┘
```

**FIG. 4**

EP 4 087 254 A1

**Description**

TECHNICAL FIELD

The disclosure relates to the technical field of video coding and decoding, and particularly to an inter prediction method, an encoder, a decoder, and a storage medium.

BACKGROUND

In a related art, when inter prediction is performed based on Bi-directional Optical Flow Prediction (BDOF) in a video coding/decoding process, a spatial gradient, a time gradient, an auto-correlation parameter, a cross correlation parameter, an optical flow vector, a luma offset value and the like need to be calculated for each sub-block in a coding block or decoding block to finally obtain a luma prediction value corresponding to each sub-block. The calculation process is complex, high in time consumption and low in calculation efficiency.

SUMMARY

In order to solve the related technical problem, embodiments of the disclosure provide an inter prediction method, an encoder, a decoder, and a storage medium.

The technical solutions of the embodiments of the disclosure may be implemented as follows.

According to a first aspect, an embodiment of the disclosure provides an inter prediction method, which may be applied to an encoder and include the following operations.

A first Motion Vector (MV) and a second MV of a current block are determined, the first MV being a forward MV of the current block, and the second MV being a backward MV of the current block.

It is determined whether a set condition is satisfied based on the first MV and the second MV to obtain a determination result.

A value of a BDOF flag is set according to the determination result.

An inter prediction value of the current block or at least one sub-block in the current block is determined based on the value of the BDOF flag.

According to a second aspect, an embodiment of the disclosure provides an inter prediction method, which may be applied to a decoder and include the following operations.

A first MV and a second MV of a current block are determined, the first MV being a forward MV of the current block, and the second MV being a backward MV of the current block.

It is determined whether a set condition is satisfied based on the first MV and the second MV to obtain a determination result.

A value of a BDOF flag is set according to the determination result.

An inter prediction value of the current block or at least one sub-block in the current block is determined based on the value of the BDOF flag.

According to a third aspect, an embodiment of the disclosure provides a encoder, which may include a first determination unit, a first determination unit, a first setting unit, and a first prediction unit.

The first determination unit may be configured to determine a first MV and a second MV of a current block, the first MV being a forward MV of the current block, and the second MV being a backward MV of the current block.

The first judgment unit may be configured to determine whether a set condition is satisfied based on the first MV and the second MV to obtain a determination result.

The first setting unit may be configured to set a value of a BDOF flag according to the determination result.

The first prediction unit may be configured to determine an inter prediction value of the current block or at least one sub-block in the current block based on the value of the BDOF flag.

According to a fourth aspect, an embodiment of the disclosure provides a decoder, which may include a second determination unit, a second judgment unit, a second setting unit, and a second prediction unit.

The second determination unit may be configured to determine a first MV and a second MV of a current block, the first MV being a forward MV of the current block, and the second MV being a backward MV of the current block.

The second judgment unit may be configured to determine whether a set condition is satisfied based on the first MV and the second MV to obtain a determination result.

The second setting unit may be configured to set a value of a BDOF flag according to the determination result.

The second prediction unit may be configured to determine an inter prediction value of the current block or at least one sub-block in the current block based on the value of the BDOF flag.

According to a fifth aspect, an embodiment of the disclosure provides an encoder, which may include a first processor and a first memory configured to store a computer program capable of running in the processor.

The first processor may be configured to run the computer program to execute operations of the method as described in the first aspect.

According to a sixth aspect, an embodiment of the disclosure provides a decoder, which may include a second processor and a second memory configured to store a computer program capable of running in the processor.

The second processor may be configured to run the computer program to execute operations of the method as described in the second aspect.

According to a seventh aspect, an embodiment of the disclosure provides a storage medium, having a computer program stored thereon. The computer program may be executed by a processor to implement operations of the method as described in the first aspect. Alternatively, the computer program may be executed by the processor to implement operations of the method as described in the second aspect.

The embodiments of the disclosure provide an inter prediction method, an encoder, a decoder, and a storage medium. In an inter prediction process for video coding/decoding, a forward MV and a backward MV corresponding to a current block are determined, determination is made based on the MVs using a corresponding set condition, and a value of a BDOF flag corresponding to the current block or at least one sub-block in the current block is set according to the determination result, so as to determine whether to perform BDOF on the current block or the at least one sub-block in the current block. Based on the solutions provided in the embodiments of the disclosure, when the current block or any sub-block in the current block does not satisfy a BDOF utilization condition, BDOF may be skipped for the current block or the current sub-block. Therefore, an unnecessary calculation process may be avoided for the current block or current sub-block not satisfying the BDOF utilization condition, so as to reduce the calculation complexity in the inter prediction process as well as the time consumption for calculation and improve the calculation efficiency for inter prediction in a video coding/decoding process.

BRIEF DESCRIPTION OF THE DRAWINGS

FIG. 1 is an implementation flowchart of a BDOF-based prediction process according to a related technical solution.
FIG. 2 is a schematic diagram of a BDOF input block according to a related technical solution.
FIG. 3A is a composition block diagram of a video coding system according to an embodiment of the disclosure.
FIG. 3B is a composition block diagram of a video decoding system according to an embodiment of the disclosure.
FIG. 4 is an implementation flowchart of an inter prediction method according to an embodiment of the disclosure.
FIG. 5A is an implementation flowchart of determining MVs by an encoder according to an embodiment of the disclosure.
FIG. 5B is an implementation flowchart of determining MVs by a decoder according to an embodiment of the disclosure.
FIG. 6 is an implementation flowchart of determining whether a set condition is satisfied based on MVs in an inter prediction method according to an embodiment of the disclosure.
FIG. 7 is an implementation flowchart of determining whether a set condition is satisfied based on a difference block in an inter prediction method according to an embodiment of the disclosure.
FIG. 8 is a composition structure diagram of an encoder according to an embodiment of the disclosure.
FIG. 9 is a composition structure diagram of a decoder according to an embodiment of the disclosure.
FIG. 10 is a hardware structure diagram of an encoder according to an embodiment of the disclosure.
FIG. 11 is a hardware structure diagram of a decoder according to an embodiment of the disclosure.

DETAILED DESCRIPTION

In order to make the characteristics and technical contents of the embodiments of the disclosure understood in more detail, the implementation of the embodiments of the disclosure will be described below in combination with the drawings in detail. The appended drawings are only adopted for description as references and not intended to limit the embodiments of the disclosure.

A related technical solution to a present BDOF-based prediction process will be described below.

The next-generation video coding standard (H.266) uses a BDOF technology proposed by InterDigital Communications in JVET-L0256. The BDOF technology is configured to perform sub-block-based luma compensation on a bi-directional prediction block in a motion compensation process for inter prediction. A luma prediction value for luma compensation is obtained by sub-block-based optical flow calculation.

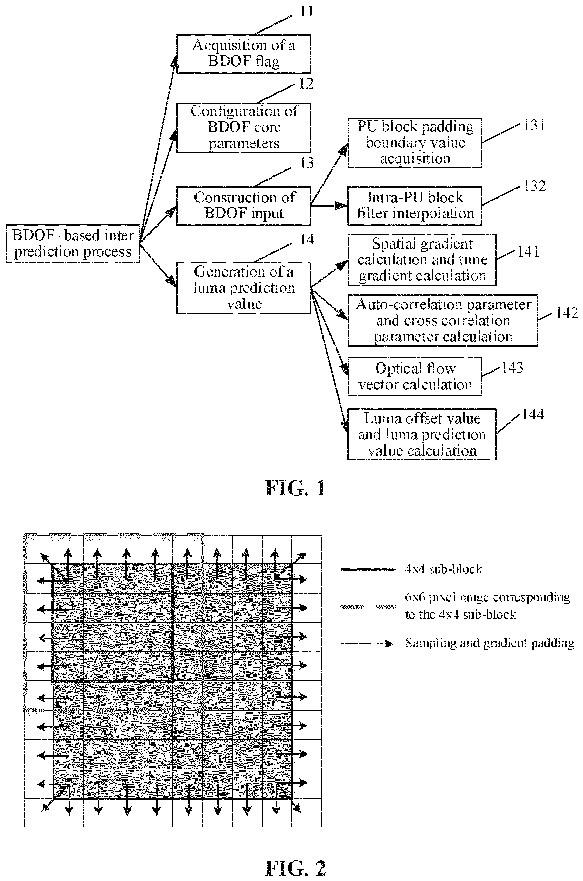

In a related art, as illustrated in FIG. 1, a BDOF-based prediction process includes acquisition of a BDOF flag 11, configuration of BDOF core parameters 12, construction of BDOF input 13, and generation of a luma prediction value 14. Specifically, acquisition of the BDOF flag 11 is divided into two operations. First, a prediction Unit (PU)-level BDOF flag bdofFlag corresponding to a current block is acquired. A Sum of Absolute Difference (SAD) threshold bdofBlkDiffThres and SAD value of each 4x4 sub-block in the current block are calculated when bdofFlag corresponding to the current block is set to be true (a value of bdofFlag is "1"). When a SAD value of a current sub-block is more than or equal to bdofBlkDiffThres, a sub-block-level BDOF flag sbdofFlag corresponding to the current sub-block is set to be true (a value of sbdofFlag is "1"), a corresponding sub-block BDOF utilization flag bdofUtilizationFlag[xIdx][yIdx] is set to be true, and BDOF is performed on the current sub-block. When the SAD value of the current sub-block is less than bdofBlkDiffThres, sbdofFlag corresponding to the current sub-block is set to be false (the value of sdbofFlag is "0"), corresponding bdofUtilizationFlag[xIdx][yIdx] is set to be false, and a subsequent BDOF-based prediction process is terminated for the current sub-block. BDOF is terminated for the current block when bdofFlag corresponding to the current block is set to be false (the value of bdofFlag is "0"). It may be understood that the BDOF-based prediction process is terminated for all 4x4 sub-blocks in the current block. For configuration of the BDOF core parameters 12, BDOF core parameters include shift parameters shift1 to shift4 and a clamping value mvRefineThres. Based on configuration of the BDOF core parameters, shifting is performed according to the shift parameters in a process of calculating a time gradient and a spatial gradient so as to screen gradients of different granularities and remove gradient noises, and clamping is performed on an optical flow vector according to the clamping value in a process of calculating the optical flow vector. Table 1 illustrates a setting example of the BDOF core parameters.

Table 1

| Shift1 | Shift2 | Shfit3 | Shfit4 | Offset4 | mvRefineThres |
|--------|--------|--------|--------|---------|---------------|
| 6 | 4 | 1 | Max(3,15-BitDepth) | 1<<(shift4-1) | 1<<4 |

The construction of BDOF input 13 includes PU block padding boundary value acquisition 131 and intra-PU-block filter interpolation 132. Specifically, a BDOF input block includes a PU block in a size of (sbWidth+2)x(sbHeight+2) obtained by performing boundary padding and intra-block 8-tap filter interpolation on a forward prediction block and backward prediction block in a size of sbWidth x sbHeight. As illustrated in FIG. 2, a white block at a boundary of the PU block is a padding value, and a gray block in the PU block is a value obtained by 8-tap filter interpolation. The generation of a luma prediction value 14 includes execution of spatial gradient calculation and time gradient calculation 141, auto-correlation parameter and cross correlation parameter calculation 142, optical flow vector calculation 143, and luma offset value and luma prediction value calculation 144, sequentially on each pixel of each 4x4 sub-block in the PU block to obtain a luma prediction value of each 4x4 sub-block in the PU block, and further obtain a luma prediction block of the PU block.

As described above, in the related art, spatial gradient calculation and time gradient calculation 141, auto-correlation parameter and cross correlation parameter calculation 142, optical flow vector calculation 143 and luma offset value and luma prediction value calculation 144 need to be sequentially performed on each pixel in each 4x4 sub-block in a current block in a process of generating a luma prediction value by use of the BDOF technology. The complexity in calculation and the time consumption are high, and the calculation efficiency is low.

Based on this, in the embodiments of the disclosure, during inter prediction for video coding/decoding, a forward MV and a backward MV corresponding to a current block are determined, determination is made based on the MVs using a corresponding set condition, and a value of a BDOF flag corresponding to the current block or at least one sub-block in the current block is set according to the determination result, so as to determine whether to perform BDOF on the current block or the at least one sub-block in the current block. Based on the solutions provided in the embodiments of the disclosure, when the current block or any sub-block in the current block does not satisfy a BDOF utilization condition, execution of BDOF may be skipped for the current block or the current sub-block. Therefore, an unnecessary calculation process may be avoided for the current block or current sub-block not satisfying the BDOF utilization condition, which reduces the calculation complexity in the inter prediction process as well as the time consumption for calculation and improves the calculation efficiency for inter prediction in a video coding/decoding process.

The disclosure will further be described below in combination with the drawings and embodiments in detail.

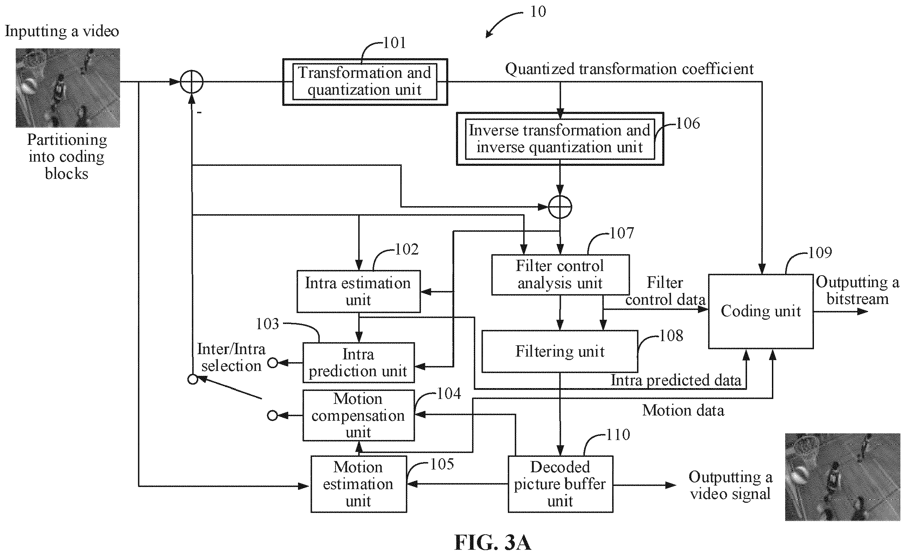

FIG. 3A is an exemplary composition block diagram of a video coding system according to an embodiment of the disclosure. As illustrated in FIG. 3A, the video coding system 10 includes a transformation and quantization unit 101, an intra estimation unit 102, an intra prediction unit 103, a motion compensation unit 104, a motion estimation unit 105, an inverse transformation and inverse quantization unit 106, a filter control analysis unit 107, a filtering unit 108, a coding unit 109, a decoded picture buffer unit 110, etc. The filtering unit 108 may implement deblocking filtering and Sample Adaptive Offset (SAO) filtering. The coding unit 109 may implement header information coding and Context-based Adaptive Binary Arithmetic Coding (CABAC). For an input original video signal, a video coding block may be obtained by division of a Coding Tree Unit (CTU). Then, residual pixel information obtained by intra or inter prediction is processed by the transformation and quantization unit 101 to transform the video coding block, including transforming the residual information from a pixel domain to a transformation domain and quantizing an obtained transformation coefficient to further reduce a bit rate. The intra estimation unit 102 and the intra prediction unit 103 are configured to perform intra prediction on the video coding block. Exactly, the intra estimation unit 102 and the intra prediction unit 103 are configured to determine an intra prediction mode to be used for coding the video coding block. The motion compensation unit 104 and the motion estimation unit 105 are configured to perfofrme intra prediction coding on the received video coding block relative to one or more blocks in one or more reference frames to provide time prediction information. Motion estimation performed by the motion estimation unit 105 is a process of generating an MV. A motion of the video coding block may be estimated according to the MV. Then, the motion compensation unit 104 performs motion compensation based on the MV determined by the motion estimation unit 105. After the intra prediction mode is determined, the intra prediction unit 103 is further configured to provide selected intra predicted data for the coding unit 109, and the motion estimation unit 105 also sends calculated MV data to the coding unit 109. In addition, the inverse transformation and inverse quantization unit 106 is configured to reconstruct the video coding block, i.e., a residual block is reconstructed in the pixel domain. An artifact with a blocking effect in the reconstructed residual block is removed through the filter control analysis unit 107 and the filtering unit 108, and then, the reconstructed residual block is added to a predictive block in a frame of the decoded picture buffer unit 110 to generate a reconstructed video coding block. The coding unit 109 is configured to encode various coding parameters and quantized transformation coefficients. In a CABAC-based coding algorithm, a context content may be configured to encode information indicating the determined intra prediction mode based on adjacent coding blocks and output a bitstream of the video signal. The decoded picture buffer unit 110 is configured to store the reconstructed video coding block for prediction reference. As video pictures are encoded, new reconstructed video coding blocks may be continuously generated, and these reconstructed video coding blocks may be stored in the decoded picture buffer unit 110.

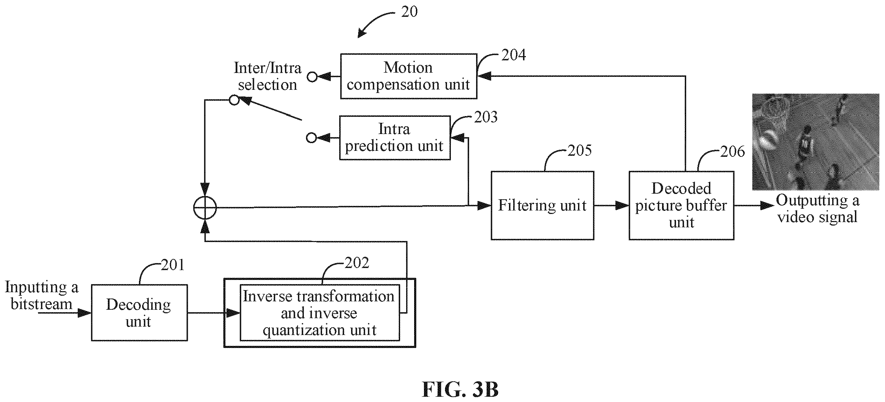

FIG. 3B is an exemplary composition block diagram of a video decoding system according to an embodiment of the disclosure. As illustrated in FIG. 3B, the video decoding system 20 includes a decoding unit 201, an inverse transformation and inverse quantization unit 202, an intra prediction unit 203, a motion compensation unit 204, a filtering unit 205, a decoded picture buffer unit 206, etc. The decoding unit 201 may implement header information decoding and CABAC decoding. The filtering unit 205 may implement deblocking filtering and SAO filtering. After a coding process illustrated in FIG. 3A is performed on an input video signal, a bitstream of the video signal is output. The bitstream is input to the video decoding system 20, and is processed through the decoding unit 201 at first to obtain a decoded transformation coefficient. The transformation coefficient is processed through the inverse transformation and inverse quantization unit 202 to generate a residual block in a pixel domain. The intra prediction unit 203 may be configured to generate predicted data of a current video decoding block based on a determined intra prediction mode and data of a previous decoded block from a current frame or picture. The motion compensation unit 204 analyzes an MV and another associated syntactic element to determine prediction information for the video decoding block, and generates a predictive block of the presently decoded video decoding block by use of the prediction information. The residual block from the inverse transformation and inverse quantization unit 202 and the corresponding predictive block generated by the intra prediction unit 203 or the motion compensation unit 204 are summed to form a decoded video block. An artifact with a blocking effect in the decoded video signal may be removed through the filtering unit 205 to improve the video quality. Then, the decoded video block is stored in the decoded picture buffer unit 206. The decoded picture buffer unit 206 stores a reference picture for subsequent intra prediction or motion compensation, and also outputs a video signal. That is, the recovered original video signal is obtained.

An inter prediction method in the embodiments of the disclosure is mainly applied to the motion compensation unit 104 illustrated in FIG. 3A and the motion compensation unit 204 illustrated in FIG. 3B. That is, the inter prediction method in the embodiments of the disclosure may be applied to the video coding system, may also be applied to the video decoding system, or may even be applied to the video coding system and the video decoding system at the same time. It is also to be noted that, when the inter prediction method is applied to the motion compensation unit 104, the "current block" specifically refers to a current coding block in inter prediction, and the "current sub-block" specifically refers to a current 4x4 sub-block of the current coding block in inter prediction. When the inter prediction method is applied to the motion compensation unit 204, the "current block" specifically refers to a current decoding block in inter prediction, and the "current sub-block" specifically refers to a current 4x4 sub-block of the current decoding block in inter prediction.

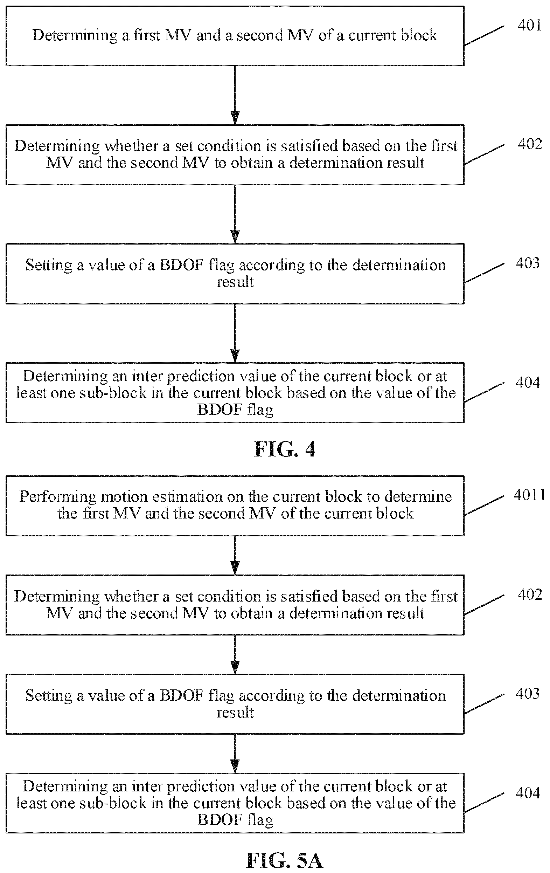

Based on the application scene example illustrated in FIG. 3A or FIG. 3B, FIG. 4 is an implementation flowchart of an inter prediction method according to an embodiment of the disclosure. As illustrated in FIG. 4, the method may include the following operations.

At 401, a first MV and a second MV of a current block are determined.

The first MV is a forward MV (mv0) of the current block. The second MV is a backward MV (mv1) of the current block. An MV includes a motion distance and a motion direction, and is obtained by performing motion estimation on a video coding block.

In an embodiment, when the inter prediction method is applied to a video coding system, as illustrated in FIG.

5A, the operation that the first MV and the second MV of the current block are determined includes the following operation.

At 4011, motion estimation is performed on the current block to determine the first MV and the second MV of the current block.

Picture contents between adjacent picture frames are correlated and continuous to some extents. Based on this, a picture frame is divided into a plurality of PU blocks, a position of each PU block in an adjacent picture frame is found, and relative offset between a position of the PU block in the current picture frame and the position in the adjacent picture frame is obtained. As a result, an MV corresponding to the PU block is obtained. A relative offset between a position of the current block in a current picture frame and a position in a previous picture frame is determined as the first MV (forward MV). A relative offset between the position of the current block in the current picture frame and a position in a next picture frame is determined as the second MV (backward MV).

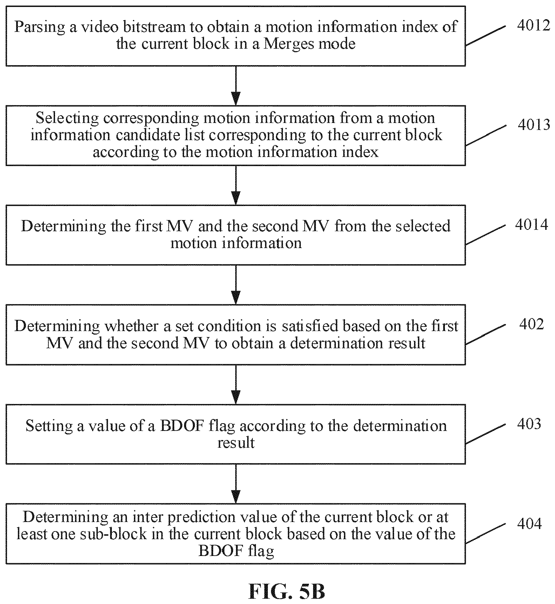

In an embodiment, when the inter prediction method is applied to a video decoding system, as illustrated in FIG. 5B, the operation that the first MV and the second MV of the current block are determined includes the following operations.

At 4012, a video bitstream is parsed to obtain a motion information index of the current block in a Merges mode.

At 4013, corresponding motion information is selected from a motion information candidate list corresponding to the current block according to the motion information index.

At 4014, the first MV and the second MV are determined from the selected motion information.

In the Merges mode, the motion information of the current block is inferred by use of motion information of an adjacent block. Herein, the motion information candidate list corresponding to the current block is determined based on the motion information of the adjacent block of the current block. The video bitstream is parsed to acquire the motion information index corresponding to the current block, the motion information indicated by the motion information index is selected from the motion information candidate list, and the forward MV and backward MV corresponding to the current block are further determined from the selected motion information.

At 402, it is determined whether a set condition is satisfied based on the first MV and the second MV to obtain a determination result.

The determination is made based on the first MV and the second MV by use of the set condition to obtain a determination result that the set condition is satisfied or a determination result that the set condition is not satisfied. The obtained determination result is used for determining a value of a corresponding BDOF flag.

It is to be noted that, in some embodiments, it may be determined whether the first MV and the second MV satisfy a corresponding set condition to obtain a determination result for determining a value of a BDOF flag corresponding to the current block. In some embodiments, a difference block corresponding to any sub-block in the current block may be determined based on a first reference block that the first MV points to and a second reference block that the second MV points to, and it is determined whether the difference block satisfies a corresponding set condition to obtain a determination result for determining a value of a BDOF flag corresponding to the corresponding sub-block in the current block.

At 403, a value of a BDOF flag is set according to the determination result.

At 404, an inter prediction value of the current block or at least one sub-block in the current block is determined based on the value of the BDOF flag.

BDOF is performed on a current sub-block if values of BDOF flags corresponding to the current block and the current sub-block are both equal to a first set value. It is to be noted that a determined inter prediction value of the current sub-block includes a luma prediction value calculated based on BDOF. If the value of the BDOF flag corresponding to the current block is a second set value, BDOF is terminated for the current block. In terms of technical effect, terminating BDOF for the current block means not using BDOF for all 4x4 sub-blocks in the current block. If the value of the BDOF flag corresponding to the current block is the first set value, and the value of the BDOF flag corresponding to the current sub-block is the first set value, the current sub-block is skipped for BDOF, but whether to perform BDOF on a next sub-block still needs to be determined based on a value of a BDOF flag corresponding to the next sub-block in the current block.

It is to be noted that when BDOF is terminated for the current block, the inter prediction value of the current block is determined based on the first MV and the second MV Alternatively, when BDOF is terminated for the current sub-block, the inter prediction value of the current sub-block is determined based on the first MV and the second MV. The determined inter prediction value does not include a luma prediction value calculated based on BDOF.

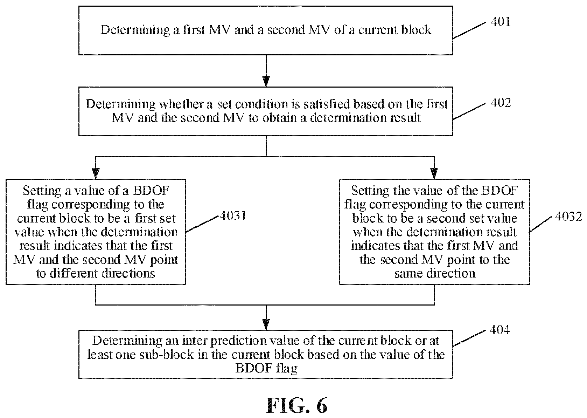

In an embodiment, the set condition is determined as that directions of the first MV and the second MV are the same. The value of the BDOF flag corresponding to the current block is set through the determination regarding whether the directions of the first MV and the second MV are the same. The MV represents a relative offset between the current block and a best matched block in a reference picture of the current block. Specifically, as illustrated in FIG. 6, the operation that the value of the BDOF flag according to the determination result includes the following operations.

At 4031, the value of the BDOF flag corresponding to the current block is set to be a first set value when the determination result indicates that the first MV and the second MV point to different directions.

That is, the value of the BDOF flag corresponding to the current block is set to be the first set value when the first MV and the second MV are MVs of the same direction. The BDOF flag corresponding to the current block is set to be true when the value of the BDOF flag corresponding to the current block is the first set value. In practical applications, bdofFlag corresponding to the current block may be set to be true, i.e., the first set value is "1".

At 4032, the value of the BDOF flag corresponding to the current block is set to be a second set value when the determination result indicates that the first MV and the second MV point to the same direction.

That is, the value of the BDOF flag corresponding to the current block is set to be the second set value when the first MV and the second MV are MVs of different directions. The BDOF flag corresponding to the current block is set to be false when the value of the BDOF flag corresponding to the current block is the second set value. In practical applications, bdofFlag corresponding to the current block may be set to be false, i.e., the second set value is "0". When the BDOF flag corresponding to the current block is set to be false, BDOF is not applied for all 4x4 sub-blocks in the current block.

Specifically, when it is determined whether the set condition is satisfied based on the first MV and the second MV to obtain the determination result, the method includes the following operation.

It is determined whether the first MV and the second MV point to the same direction according to a horizontal component of the first MV, a vertical component of the first MV, a horizontal component of the second MV and a vertical component of the second MV.

In an embodiment, when it is determined whether directions of two MVs are the same based on horizontal components and vertical components of the MVs, the determination regarding whether the directions of the two MVs are the same is mainly according to symbol values of the horizontal components and symbol values of the vertical components. Specifically, the operation that it is determined whether the first MV and the second MV point to the same direction according to the horizontal component of the first MV, the vertical component of the first MV, the horizontal component of the second MV and the vertical component of the second MV includes the following operations.

First, a first symbol value of the horizontal component of the first MV, a second symbol value of the vertical component of the first MV, a third symbol value of the horizontal component of the second MV and a fourth symbol value of the second MV are determined.

A corresponding symbol value is determined according to a value of a corresponding component. That is, a symbol value corresponding to a vertical component is determined according to a value of the vertical component, and a symbol value of a horizontal component is determined according to a value of the horizontal component, specifically as follows.

The symbol value corresponding to the component is determined to be 1 when the value of the corresponding component is greater than 0.

The symbol value corresponding to the component is determined to be 0 when the value of the corresponding component is equal to 0.

The symbol value corresponding to the component is determined to be -1 when the value of the corresponding component is less than 0.

The corresponding symbol values are assigned to the vertical components or the horizontal components based on the above solution. Therefore, the operations are performed.

In an embodiment, it is determined that the first MV and the second MV point to different directions when one of the following conditions is satisfied:

all of the first symbol value, the second symbol value, the third symbol value and the fourth symbol value are equal to 0;
the first symbol value is different from the third symbol value, and the second symbol value is different from the fourth symbol value;
both the first symbol value and the third symbol value are equal to 0, and the second symbol value is different from the fourth symbol value; or
the first symbol value is different from the third symbol value, and both the second symbol value and the fourth symbol value are equal to 0.

Otherwise, it is determined that the first MV and the second MV point to the same direction when all of the following conditions are not satisfied:

all of the first symbol value, the second symbol value, the third symbol value and the fourth symbol value are 0;
the first symbol value is different from the third symbol value, and the second symbol value is different from the fourth symbol value;
both the first symbol value and the third symbol value are equal to 0, and the second symbol value is different from the fourth symbol value; or
the first symbol value is different from the third symbol value, and both the second symbol value and the fourth symbol value are equal to 0.

In an embodiment, it is determined that the first MV and the second MV point to different directions when all of the following conditions are satisfied:

a product of the first symbol value and the third symbol value is less than or equal to 0; or
a product of the second symbol value and the fourth symbol value is less than or equal to 0.

Otherwise, it is determined that the first MV and the second MV point to the same direction when any one of the following conditions is not satisfied:

the product of the first symbol value and the third symbol value is less than or equal to 0; or
the product of the second symbol value and the fourth symbol value is less than or equal to 0.

In an embodiment, when it is determined whether directions of two MVs are the same based on horizontal components and vertical components of the MVs, it is determined whether the directions of the two MVs are the same according to whether the horizontal components and vertical components of the first MV and the second MV are the same, specifically as follows.

In an embodiment, the operation that it is determined whether the first MV and the second MV point to the same direction according to the horizontal component of the first MV, the vertical component of the first MV, the horizontal component of the second MV and the vertical component of the second MV includes the following operations.

It is determined that the first MV and the second MV point to different directions when one of the following conditions is satisfied:

all of the horizontal component of the first MV, the vertical component of the first MV, the horizontal component of the second MV and the vertical component of the second MV are 0;
the horizontal component of the first MV is unequal to the horizontal component of the second MV, and the vertical component of the first MV is unequal to the vertical component of the second MV;
the horizontal component of the first MV is unequal to the horizontal component of the second MV, and both the vertical component of the first MV and the vertical component of the second MV are equal to 0; or
both the horizontal component of the first MV and the horizontal component of the second MV are equal to 0, and the vertical component of the first MV is unequal to the vertical component of the second MV

Otherwise, it is determined that the first MV and the second MV point to the same direction when all of the following conditions are not satisfied:

all of the horizontal component of the first MV, the vertical component of the first MV, the horizontal component of the second MV and the vertical component of the second MV are 0;
the horizontal component of the first MV is unequal to the horizontal component of the second MV, and the vertical component of the first MV is unequal to the vertical component of the second MV;
the horizontal component of the first MV is unequal to the horizontal component of the second MV, and both the vertical component of the first MV and the vertical component of the second MV are equal to 0; or
both the horizontal component of the first MV and the horizontal component of the second MV are equal to 0, and the vertical component of the first MV is unequal to the vertical component of the second MV

In an embodiment, the operation that it is determined whether the first MV and the second MV point to the same direction according to the horizontal component of the first MV, the vertical component of the first MV, the horizontal component of the second MV and the vertical component of the second MV includes the following operations.

It is determined that the first MV and the second MV point to different directions when all of the following conditions are satisfied:

a product of the horizontal component of the first MV and the horizontal component of the second MV is less than or equal to 0; or
a product of the vertical component of the first MV and the vertical component of the second MV is less than or equal to 0.

Otherwise, it is determined that the first MV and the second MV point to the same direction when any one of the following conditions is not satisfied:

the product of the horizontal component of the first MV and the horizontal component of the second MV is less than or equal to 0; or
the product of the vertical component of the first MV and the vertical component of the second MV is less than or equal to 0.

In an embodiment, when it is determined whether the set condition is satisfied based on the first MV and the second MV to obtain the determination result, the method includes the following operation.

It is determined that the first MV and the second MV point to different directions when the first MV is opposite to the second MV. It is determined that the first MV and the second MV point to the same direction when the first MV is not opposite to the second MV

It is determined whether the first MV and the second MV point to different directions through determining whether the first MV is opposite to the second MV, specifically as follows.

In an embodiment, the method further includes the following operations.

A first symbol value of the horizontal component of the first MV, a second symbol value of the vertical component of the first MV, a third symbol value of the horizontal component of the second MV and a fourth symbol value of the second MV are determined.

It is determined that the first MV is opposite to the second MV when the first symbol value is unequal to the third symbol value and the second symbol value is unequal to the third symbol value.

A corresponding symbol value is determined according to a value of a corresponding component based on the above solution, namely as follows.

The symbol value corresponding to the component is determined to be 1 when the value of the corresponding component is greater than 0.

The symbol value corresponding to the component is determined to be 0 when the value of the corresponding component is equal to 0.

The symbol value corresponding to the component is determined to be -1 when the value of the corresponding component is less than 0.

In an embodiment, the method further includes the following operation.

It is determined that the first MV is opposite to the second MV when one of the first MV and the second MV is 0.

In an embodiment, the method further includes the following operations.

An included angle between the first MV and the second MV is determined.

It is determined that the first MV is opposite to the second MV when a direction to which the first MV points is taken as a 0-degree direction and a value of the included angle is within a first set range.

A lower limit value of the first set range is larger than 90 degrees, and an upper limit value of the first set range is smaller than 270 degrees.

Furthermore, in an embodiment, when it is determined whether the first MV and the second MV point to different directions, it is required to determine whether a magnitude of the first MV and a magnitude of the second MV satisfy a first magnitude condition, in addition to determining whether the first MV is opposite to the second MV. A magnitude of an MV may be obtained by taking an absolute value of the MV or a square root of the MV, specifically as follows.

In an embodiment, when it is determined whether the set condition is satisfied based on the first MV and the second MV to obtain the determination result, the method includes the following operations.

It is determined that the first MV and the second MV point to different directions when the first MV is opposite to the second MV and a magnitude of the first MV and a magnitude of the second MV satisfy a first magnitude condition.

It is determined that the first MV and the second MV point to the same direction when the first MV is not opposite to the second MV or the magnitude of the first MV and the magnitude of the second MV do not satisfy the first magnitude condition.

In an embodiment, the method further includes the following operation.

It is determined that the magnitude of the first MV and the magnitude of the second MV satisfy the first magnitude condition when the magnitude of the first MV is equal to the magnitude of the second MV

In an embodiment, the method further includes the following operations.

It is determined that the magnitude of the first MV and the magnitude of the second MV satisfy the first magnitude condition when a first magnitude ratio is within a second set range.

The first magnitude ratio is determined based on the magnitude of the first MV and the magnitude of the second MV

In an embodiment, the method further includes the following operations.

The first magnitude ratio is determined according to a ratio of a first magnitude to a second magnitude.

It is determined that the first magnitude ratio is within the second set range when the first magnitude ratio is less than or equal to a first set ratio.

The first magnitude is the greater in the magnitude of the first MV and the magnitude of the second MV, and the second magnitude is the smaller in the magnitude of the first MV and the magnitude of the second MV. The first set ratio is a real number greater than 1.

In an embodiment, the first set ratio is equal to 2.

In an embodiment, when it is determined whether the set condition is satisfied based on the first MV and the second MV to obtain the determination result, the method includes the following operations.

A sum vector of a sum of the first MV and the second MV is determined.

It is determined that the first MV and the second MV point to different directions when one of the following conditions is satisfied, and it is determined that the first MV and the second MV point to the same direction when all of the following conditions are not satisfied:

both a horizontal component and a vertical component of the sum vector are equal to 0;

a magnitude of the sum vector is less than a first set magnitude;

a second magnitude ratio is less than a second set ratio, the second magnitude ratio being a ratio of the magnitude of the sum vector to a second magnitude, and the second magnitude being the smaller in a magnitude of the first MV and a magnitude of the second MV;

a ratio of the magnitude of the sum vector to a third magnitude is less than a third set ratio, the third magnitude being a sum of the magnitude of the first MV and the magnitude of the second MV;

a direction of the sum vector is the same as a direction of the first MV or a direction of the second MV;

the direction of the sum vector is the same as the direction of the first MV or the direction of the second MV, and the magnitude of the sum vector is less than a second set magnitude;

the direction of the sum vector is the same as the direction of the first MV or the direction of the second MV, and the second magnitude ratio is less than a fourth set ratio; or

the direction of the sum vector is the same as the direction of the first MV or the direction of the second MV, and the ratio of the magnitude of the sum vector to the third magnitude is less than a fifth set ratio.

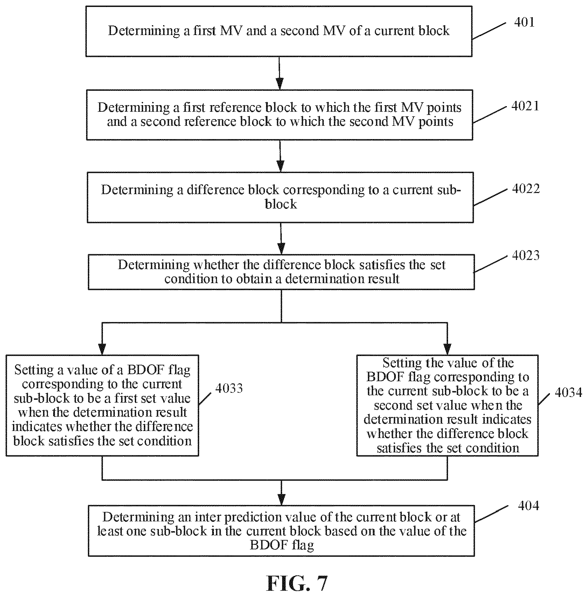

In an embodiment, a difference block corresponding to a current sub-block in the current block is determined based on the first MV and the second MV, and a value of a BDOF flag corresponding to the current sub-block is set by determining whether the difference block satisfies the set condition. Specifically, as illustrated in FIG. 7, the operation that it is determined whether the set condition is satisfied based on the first MV and the second MV to obtain the determination result includes the following operations.

At 4021, a first reference block to which the first MV points and a second reference block to which the second MV points are determined.

The first MV is a forward MV of the current block, and correspondingly, the first reference block that the first MV points to is a forward prediction block of the current block. The second MV is a backward MV of the current block, and correspondingly, the second reference block that the second MV points to is a backward prediction block of the current block.

At S4022, a difference block corresponding to a current sub-block is determined.

The difference block is determined based on corresponding pixels in the first reference block and corresponding pixels in the second reference block. Specifically, pixels in one-to-one correspondence with a pixel range (referred to as a forward prediction sub-block of the current sub-block hereinafter) of the current sub-block are determined from the first reference block. Pixels in one-to-one correspondence with a pixel range (referred to as a backward prediction sub-block of the current sub-block hereinafter) of the current sub-block are determined from the second reference block. The difference block corresponding to the current sub-block is determined based on the pixels determined from the first reference block and the pixels determined from the second reference block.

At 4023, it is determined whether the difference block satisfies the set condition to obtain a determination result.

Specifically, the operation that a value of a BDOF flag is set according to the determination result includes the following operations.

At 4033, when the determination result indicates whether the difference block satisfies the set condition, the value of the BDOF flag corresponding to the current sub-block is set to be a first set value.

The value of the BDOF flag corresponding to the current sub-block is set to be the first set value when the difference block satisfies the set condition. The BDOF flag corresponding to the current sub-block is set to be true when the value of the BDOF flag corresponding to the current sub-block is the first set value. In practical applications, sbBdofFlag and bdofUtilizationFlag[xIdx][yIdx] corresponding to the current sub-block may be set to be true, i.e., the first set value is "1".

At 4034, when the determination result indicates whether the difference block satisfies the set condition, the value of the BDOF flag corresponding to the current sub-block is set to be a second set value.

The value of the BDOF flag corresponding to the current sub-block is set to be the second set value when the difference block does not satisfy the set condition. The BDOF flag corresponding to the current sub-block is set to be false when the value of the BDOF flag corresponding to the current sub-block is the second set value. In practical applications, sbBdofFlag and bdofUtilizationFlag[xIdx][yIdx] corresponding to the current block may be set to be false, i.e., the second set value is "0".

In an embodiment, the operation that the difference block corresponding to the current sub-block is determined includes the following operation.

The difference block is determined based on a time gradient corresponding to pixels in the current sub-block.

When a time gradient is calculated for the current block, the time gradient is calculated based on each 4x4 sub-block in the current block together with a boundary of the same layer (i.e., a 6x6 pixel range corresponding to the 4x4 sub-block). Specifically, a backward prediction sub-block of the current sub-block is shifted rightwards by shift2 bits, a forward prediction sub-block of the current sub-block is shifted rightwards by shift2 bits, and subtraction is correspondingly performed on each pixel of the backward prediction sub-block shifted rightwards by shift2 bits and each pixel of the forward prediction sub-block shifted rightwards by shift2 bits to obtain the time gradient corresponding to the current sub-block. The time gradient is correspondingly calculated through the following formula.

$$\text{diff}[\ x\ ][\ y\ ] = (\text{predSamplesL1}[\ hx\ ][\ vy\ ] >> \text{shift2}\ ) - (\ \text{predSamplesL0}[\ hx\ ][\ vy\ ] >> \text{shift2}\ ).$$

diff[x][y] represents a time gradient calculated for a pixel at a coordinate (x, y) on the current sub-block, preSamplesL1[hx][vy]>>shift2 represents a corresponding pixel on the backward prediction sub-block after the pixel at the coordinate (x, y) on the current sub-block is shifted rightwards by shift2 bits, and predSamplesL0[hx][vy]>>shift2 represents a corresponding pixel on the forward prediction sub-block after the pixel at the coordinate (x, y) on the current sub-block is shifted rightwards by shift2 bits.

After the difference block corresponding to the current sub-block is determined based on the time gradient, in an embodiment, the operation that it is determined whether the difference block satisfies the set condition to obtain the determination result includes the following operations.

A first maximum is determined. The first maximum is a maximum within a range of the current sub-block in the difference block. A determination result that the difference block satisfies the set condition is obtained when the first maximum is a third set value. A determination result that the difference block does not satisfy the set condition is obtained when the first maximum is not the third set value.

That is, when a maximum of a time gradient corresponding to each pixel in the current sub-block is the third set value, the determination result that the difference block satisfies the set condition is obtained, the BDOF flag corresponding to the current sub-block is set to be false, and the current sub-block is skipped for BDOF. When the maximum of the time gradient corresponding to each pixel in the current sub-block is not the third set value, the determination result that the difference block does not satisfy the set condition is obtained, the BDOF flag corresponding to the current sub-block is set to be true, and BDOF is performed on the current sub-block.

In practical applications, the third set value may be set to be 0. No loss may be brought to the coding performance when the third set value is set to be 0.

In an embodiment, the operation that it is determined whether the difference block satisfies the set condition to obtain the determination result includes the following operations.

A second maximum is determined. The second maximum is a maximum within a 6x4 pixel range corresponding to the current sub-block in the difference block. A determination result that the difference block satisfies the set condition is obtained when the second maximum is a third set value. A determination result that the difference block does not satisfy the set condition is obtained when the second maximum is not the third set value.

That is, when a maximum of a time gradient corresponding to each pixel within the 6x4 pixel range corresponding to the current sub-block is the third set value, the determination result that the difference block satisfies the set condition is obtained, the BDOF flag corresponding to the current sub-block is set to be false, and the current sub-block is skipped for BDOF. When the maximum of the time gradient corresponding to each pixel in the current sub-block is not the third set value, the determination result that the difference block does not satisfy the set condition is obtained, the BDOF flag corresponding to the current sub-block is set to be true, and BDOF is performed on the current sub-block.

Similarly, in practical applications, the third set value may be set to be 0. No loss may be brought to the coding performance when the third set value is set to be 0.

In an embodiment, the operation that it is determined whether the difference block satisfies the set condition to obtain the determination result includes the following operations.

A determination result that the difference block satisfies the set condition is obtained when a sum of differences within a range of the current sub-block in the difference block is a third set value. A determination result that the difference block does not satisfy the set condition is obtained when the sum of the differences within the range of the current sub-block in the difference block is not the third set value.

That is, when a sum of time gradients corresponding to each pixel in the current sub-block is the third set value, the determination result that the difference block satisfies the set condition is obtained, the BDOF flag corresponding to the current sub-block is set to be false, and the current sub-block is skipped for BDOF. When the sum of the time gradients corresponding to each pixel in the current sub-block is not the third set value, the determination result that the difference block does not satisfy the set condition is obtained, the BDOF flag corresponding to the current sub-block is set to be true, and BDOF is performed on the current sub-block.

Similarly, in practical applications, the third set value may be set to be 0. No loss may be brought to the coding performance when the third set value is set to be 0.

In an embodiment, the operation that it is determined whether the difference block satisfies the set condition to obtain the determination result includes the following operations.

A determination result that the difference block satisfies the set condition is obtained when a sum of differences within a 6x4 pixel range corresponding to the current sub-block in the difference block is a third set value. A determination result that the difference block does not satisfy the set condition is obtained when the sum of the differences within the 6x4 pixel range corresponding to the current sub-block in the difference block is not the third set value.

That is, when a sum of time gradients corresponding to each pixel within the 6x4 pixel range corresponding to the current sub-block is the third set value, the determination result that the difference block satisfies the set condition is obtained, the BDOF flag corresponding to the current sub-block is set to be false, and the current sub-block is skipped for BDOF. When the sum of the time gradients corresponding to each pixel within the 6x4 pixel range corresponding to the current sub-block is not the third set value, the determination result that the difference block does not satisfy the set condition is obtained, the BDOF flag corresponding to the current sub-block is set to be true, and BDOF is performed on the current sub-block.

Similarly, in practical applications, the third set value may be set to be 0. No loss may be brought to the coding performance when the third set value is set to be 0.

In an embodiment, the operation that the difference block corresponding to the current sub-block is determined includes the following operation.

Subtraction is performed on corresponding pixels in the first reference block and the second reference block to obtain the difference block.

Compared with calculation of the difference block based on the time gradient, the difference block is calculated by directly calculating a difference between pixels of the forward prediction sub-block and the backward prediction sub-block rather than shifting the pixels of the forward prediction sub-block and the backward prediction sub-block by shift2 bits.

In an embodiment, the operation that it is determined whether the difference block satisfies the set condition to obtain the determination result includes the following operations.

A first absolute maximum is determined. The first absolute maximum is an absolute maximum within a range of the current sub-block in the difference block. A determination result that the difference block satisfies the set condition is obtained when the first absolute maximum is less than a fourth set value. A determination result that the difference block does not satisfy the set condition is obtained when the first absolute maximum is more than or equal to the fourth set value.

That is, when an absolute maximum within the range of the current sub-block in the difference block is less than the fourth set value, the determination result that the difference block satisfies the set condition is obtained, the BDOF flag corresponding to the current sub-block is set to be false, and the current sub-block is skipped for BDOF. When the absolute maximum within the range of the current sub-block in the difference block is more than or equal to the fourth set value, the determination result that the difference block does not satisfy the set condition is obtained, the BDOF flag corresponding to the current sub-block is set to be true, and BDOF is performed on the current sub-block.

When time gradients are calculated by BDOF, to remove gradient noises, the rightward shift of pixels of the forward prediction sub-block and the backward prediction sub-block by shift2 bits is followed by the calculation of differences, and a granularity of the time gradient is $(shift2)^2$ (namely $4^2=16$). However, differences between the pixels of the forward prediction sub-block and the backward prediction sub-block are directly calculated here to obtain the difference block. Therefore, correspondingly to the third set value, the fourth set value may be set to be 16 in practical applications. No loss may be brought to the coding performance when the fourth set value is set to be 16.

In an embodiment, the operation that it is determined whether the difference block satisfies the set condition to obtain the determination result includes the following operations.

A second absolute maximum is determined. The second maximum is an absolute maximum within a 6x6 pixel range corresponding to the current sub-block in the difference block. A determination result that the difference block satisfies the set condition is obtained when the second absolute maximum is less than a fourth set value. A determination result that the difference block does not satisfy the set condition is obtained when the second absolute maximum is more than or equal to the fourth set value.

That is, when an absolute maximum within the 6x6 pixel range corresponding to the current sub-block in the difference block is less than the fourth set value, the determination result that the difference block satisfies the set condition is obtained, the BDOF flag corresponding to the current sub-block is set to be false, and the current sub-block is skipped for BDOF. When the absolute maximum within the 6x6 pixel range corresponding to the current sub-block in the difference block is more than or equal to the fourth set value, the determination result that the difference block does not satisfy the set condition is obtained, the BDOF flag corresponding to the current sub-block is set to be true, and BDOF is performed on the current sub-block.

Similarly, in practical applications, the fourth set value may be set to be 16. No loss may be brought to the coding performance when the fourth set value is set to be 16.

It is to be noted here that, in the related embodiments of determining whether the set condition is satisfied based on the difference block corresponding to the current sub-block, the solutions are implemented on the following basis no matter whether the difference block corresponding to the current sub-block is obtained based on the time gradient or the difference block corresponding to the current sub-block is obtained based on the difference between the forward and backward prediction sub-blocks of the current sub-block: when the set condition is not satisfied, both cross correlation parameters sGxdI and sGydI of the sub-block are 0, so both optical flow vectors vx and vy are 0, and a luma offset value bdofoffset is 0. Equivalently, BDOF is not performed. Therefore, terminating BDOF does not affect an inter prediction result, and the termination of BDOF is lossless.

The embodiments of the disclosure provide an inter prediction method, an encoder, a decoder, and a storage medium. In an inter prediction process for video coding/decoding, a forward MV and a backward MV corresponding to a current block are determined, determination is made based on the MVs using a corresponding set condition, and a value of a BDOF flag corresponding to the current block or at least one sub-block in the current block is set according to the determination result, so as to determine whether to perform BDOF on the current block or the at least one sub-block in the current block. Based on the solutions provided in the embodiments of the disclosure, when the current block or any sub-block in the current block does not satisfy a BDOF utilization condition, execution of BDOF may be skipped for the current block or the current sub-block. Therefore, an unnecessary calculation process may be avoided for the current block or current sub-block not satisfying the BDOF utilization condition, which reduces the calculation complexity in the inter prediction process as well as the time consumption for calculation and improves the calculation efficiency for inter prediction in a video coding/decoding process.

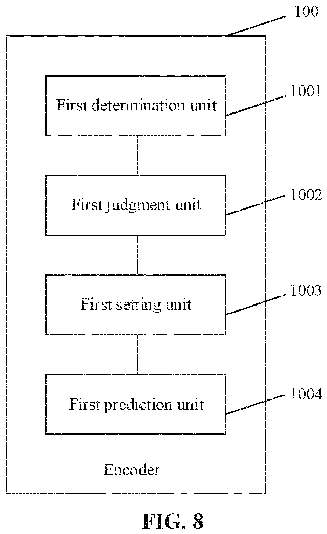

In order to implement the inter prediction method of the embodiments of the disclosure, an embodiment of the disclosure also provides an encoder. FIG. 8 is a composition structure diagram of an encoder 100 according to an embodiment of the disclosure. As illustrated in FIG. 8, the encoder 100 includes a first determination unit 1001, a first judgment unit 1002, a first setting unit 1003, and a first prediction unit 1004.

The first determination unit 1001 is configured to determine a first MV and a second MV of a current block. The first MV is a forward MV of the current block, and the second MV is a backward MV of the current block.

The first judgment unit 1002 is configured to determine whether a set condition is satisfied based on the first MV and the second MV to obtain a determination result.

The first setting unit 1003 is configured to set a value of a BDOF flag according to the determination result.

The first prediction unit 1004 is configured to determine an inter prediction value of the current block or at least one sub-block in the current block based on the value of the BDOF flag.

In practical applications, the first determination unit 1001, the first judgment unit 1002, the first setting unit 1003 and the first prediction unit 1004 may be implemented by a processor in the encoder, such as a Central Processing Unit (CPU), a Digital Signal Processor (DSP), a Microcontroller Unit (MCU), or a Field-Programmable Gate Array (FPGA).

It is to be noted that the encoder 100 provided in the embodiment is described with division of each of the above-mentioned program modules as an example during inter prediction, and in practical applications, such processing may be allocated to different program modules for completion as required. That is, an internal structure of the encoder 100 is divided into different program modules to complete all or part of the above processing. In addition, the encoder 100 provided in the embodiment belongs to the same concept as the inter prediction method embodiments, and a specific implementation process thereof refer to the method embodiments, which are not elaborated herein.

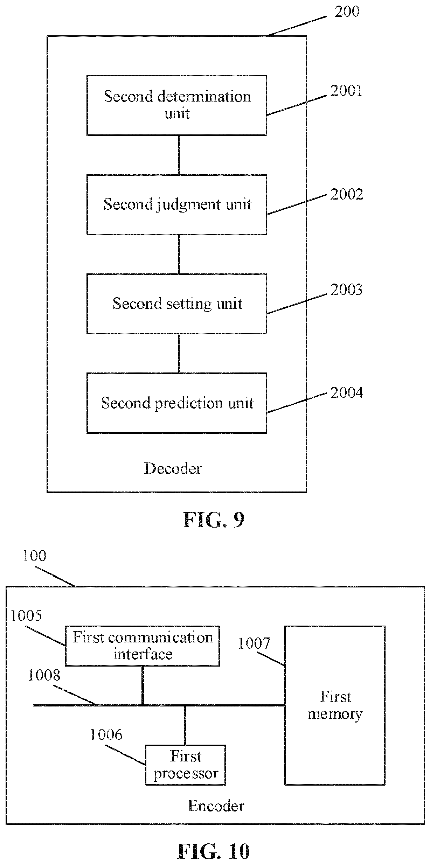

In order to implement the inter prediction method of the embodiments of the disclosure, an embodiment of the disclosure also provides a decoder. FIG. 9 is a composition structure diagram of a decoder 200 according to an embodiment of the disclosure. As illustrated in FIG. 9, the decoder 200 includes a second determination unit 2001, a second judgment unit 2002, a second setting unit 2003, and a second prediction unit 2004.

The second determination unit 2001 is configured to determine a first MV and a second MV of a current block. The first MV is a forward MV of the current block, and the second MV is a backward MV of the current block.

The second judgment unit 2002 is configured to determine whether a set condition is satisfied based on the first MV and the second MV to obtain a determination result.

The second setting unit 2003 is configured to set a value of a BDOF flag according to the determination result.

The second prediction unit 2004 is configured to determine an inter prediction value of the current block or at least one sub-block in the current block based on the value of the BDOF flag.

In practical applications, the second determination unit 2001, the second judgment unit 2002, the first setting unit 2003 and the second prediction unit 2004 may be implemented by a processor in the decoder, such as a CPU, a DSP, an MCU, or an FPGA.

It is to be noted that the decoder 200 provided in the embodiment is described with division of each of the above-mentioned program modules as an example during inter prediction, and in practical applications, such processing may be allocated to different program modules for completion as required. That is, an internal structure of the decoder 200 is divided into different program modules to complete all or part of the above processing. In addition, the decoder 200 provided in the embodiment belongs to the same concept as the inter prediction method embodiments, and a specific implementation process thereof refer to the method embodiments, which are not elaborated herein.

Based on hardware implementation of the program modules, in order to implement the inter prediction method of the embodiments of the disclosure, an embodiment of the disclosure also provides an encoder. As illustrated in FIG. 10, the encoder 100 includes a first communication interface 1005 and a first processor 1006.

The first communication interface 1005 is configured to receive and send signals in a process of receiving and sending information with another external network element.

The first processor 1006 is configured to run a computer program to execute the method provided in one or more of the above technical solutions. The computer program is stored in a first memory 1007.

Specifically, the first processor 1006 runs the computer program to execute the following operations: determining a first MV and a second MV of a current block, the first MV being a forward MV of the current block, and the second MV being a backward MV of the current block; determining whether a set condition is satisfied based on the first MV and the second MV to obtain a determination result; setting a value of a BDOF flag according to the determination result; and determining an inter prediction value of the current block or at least one sub-block in the current block based on the value of the BDOF flag.

In practical applications, various components in the encoder 100 are coupled together through a bus system 1008. It can be understood that the bus system 1008 is configured to implement connection communication between these components. The bus system 1008 includes a data bus, and further includes a power bus, a control bus, and a state signal bus. However, for clarity of description, various buses in FIG. 10 are marked as the bus system 1008.

In the embodiment of the disclosure, the first memory 1007 is configured to store various types of data to support the operation of the encoder 100. Examples of the data include any computer program for operating on the encoder 100.

The method disclosed in the embodiments of the disclosure may be applied to the first processor 1006 or implemented by the first processor 1006. The first processor 1006 may be an integrated circuit chip with a signal processing capability. In an implementation process, each operation of the method may be completed by an integrated logic circuit in a hardware form in the first processor 2006 or an instruction in a software form. The first processor 1006 may be a universal processor, a DSP or another Programmable Logic Device (PLD), a discrete gate or transistor logic device, a discrete hardware component, etc. The first processor 1006 may implement or execute each method, operation and logical block diagram disclosed in the embodiments of the disclosure. The universal processor may be a microprocessor, any conventional processor, or the like. The operations of the method disclosed in combination with the embodiments of the disclosure may be directly embodied to be executed and completed by a hardware decoding processor or executed and completed by a combination of hardware and software modules in the decoding processor. The software module may be in a storage medium. The storage medium is in the first memory 1007. The first processor 1006 reads information in the first memory 1007, and completes the operations of the method in combination with hardware.

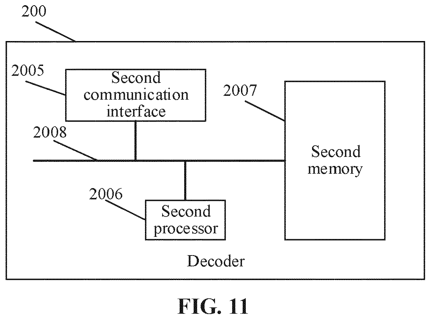

Based on hardware implementation of the program modules, in order to implement the inter prediction method of the embodiments of the disclosure, an embodiment of the disclosure also provides a decoder. As illustrated in FIG. 11, the decoder 200 includes a second communication interface 2005 and a second processor 2006.

The second communication interface 2005 is configured to receive and send signals in a process of receiving and sending information with another external network element.

The second processor 2006 is configured to run a computer program to execute the method provided in one or more of the above technical solutions. The computer program is stored in a second memory 2007.

Specifically, the second processor 2006 runs the computer program to execute the following operations: determining a first MV and a second MV of a current block, the first MV being a forward MV of the current block, and the second MV being a backward MV of the current block; determining whether a set condition is satisfied based on the first MV and the second MV to obtain a determination result; setting a value of a BDOF flag according to the determination result; and determining an inter prediction value of the current block or at least one sub-block in the current block based on the value of the BDOF flag.

In practical applications, various components in the decoder 200 are coupled together through a bus system 2008. It can be understood that the bus system 2008 is configured to implement connection communication between these components. The bus system 2008 includes a data bus, and further includes a power bus, a control bus, and a state signal bus. However, for clarity of description, various buses in FIG. 11 are marked as the bus system 2008.

In the embodiment of the disclosure, the second memory 2007 is configured to store various types of data to support the operation of the decoder 200. Examples of the data include any computer program for operating on the decoder 200.

The method disclosed in the embodiments of the disclosure may be applied to the second processor 2006 or implemented by the second processor 2006. The second processor 2006 may be an integrated circuit chip with a signal processing capability. In an implementation process, each operation of the method may be completed by an integrated logic circuit in a hardware form in the second processor 2006 or an instruction in a software form. The second processor 2006 may be a universal processor, a DSP or another PLD, a discrete gate or transistor logic device, a discrete hardware component, etc. The second processor 2006 may implement or execute each method, operation and logical block diagram disclosed in the embodiments of the disclosure. The universal processor may be a microprocessor, any conventional processor, or the like. The operations of the method disclosed in combination with the embodiments of the disclosure may be directly embodied to be executed and completed by a hardware decoding processor or executed and completed by a combination of hardware and software modules in the decoding processor. The software module may be in a storage medium. The storage medium is in the second memory 2007. The second processor 2006 reads information in the second memory 2007, and completes the operations of the method in combination with hardware.

In an exemplary embodiment, the encoder 100 or the decoder 200 may be implemented by one or more Application Specific Integrated Circuits (ASICs), DSPs, PLDs, Complex Programmable Logic Devices (CPLDs), FPGAs, universal processors, controllers, MCUs, microprocessors, or other electronic components, and is configured to execute the above-mentioned method.

It can be understood that the first memory 1007 or the second memory 2007 in the embodiments of the disclosure may be a volatile memory or a nonvolatile memory, or may include both the volatile and nonvolatile memories. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, a compact disc, or a Compact Disc Read-Only Memory (CD-ROM). The magnetic surface memory may be a disk memory or a tape memory. The volatile memory may be a Random Access Memory (RAM), and is used as an external highspeed cache. It is exemplarily but unlimitedly described that RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM) and a Direct Rambus Random Access Memory (DRRAM). The memory described in the embodiments of the disclosure is intended to include, but not limited to, memories of these and any other proper types.

In an exemplary embodiment, an embodiment of the disclosure also provides a storage medium, i.e., a computer storage medium, specifically a computer-readable storage medium. For example, a first memory 1007 storing a computer program is included. The computer program may be executed by a first processor 1006 of an encoder 100 to complete the operations of the inter prediction method applied to an encoder. For another example, a second memory 2007 storing a computer program is included. The computer program may be executed by a second processor 2006 of a decoder 200 to complete the operations of the inter prediction method applied to a decoder. The computer-readable storage medium may be a memory such as an FRAM, a ROM, a PROM, an EPROM, an EEPROM, a flash memory, a magnetic surface memory, a compact disc, or a CD-ROM.

It is to be noted that, in the disclosure, terms "include" and "contain" or any other variation thereof is intended to cover nonexclusive inclusions, so that a process, method, object or device including a series of elements not only includes those elements but also includes other elements which are not clearly listed or further includes elements intrinsic to the process, the method, the object or the device. Under the condition of no more limitations, an element defined by the statement "including a/an......" does not exclude existence of the same other elements in a process, method, object or device including the element.

It is to be noted that "first", "second" and the like are adopted to distinguish similar objects and not intended to describe a specific sequence or order.

The sequence numbers of the embodiments of the disclosure are adopted not to represent superiority-inferiority of the embodiments but only for description.

The methods disclosed in some method embodiments provided in the disclosure may be freely combined without conflicts to obtain new method embodiments.

The above is only the specific implementation of the disclosure and not intended to limit the scope of protection of the disclosure. Any variations or replacements apparent to those skilled in the art within the technical scope disclosed by the disclosure shall fall within the scope of protection of the disclosure.

**Claims**

1. An inter prediction method, applied to an encoder and comprising:

   determining a first Motion Vector, MV, and a second MV of a current block, the first MV being a forward MV of the current block, and the second MV being a backward MV of the current block;
   determining whether a set condition is satisfied based on the first MV and the second MV to obtain a determination result;
   setting a value of a Bi-directional Optical Flow Prediction, BDOF, flag according to the determination result; and
   determining an inter prediction value of the current block or at least one sub-block in the current block based on the value of the BDOF flag.

2. The method of claim 1, wherein determining the first MV and the second MV of the current block comprises:
   performing motion estimation on the current block to determine the first MV and the second MV of the current block.

3. The method of claim 1 or 2, wherein setting the value of the BDOF flag according to the determination result comprises:

   setting, when the determination result indicates that the first MV and the second MV point to different directions, the value of the BDOF flag corresponding to the current block to be a first set value; and
   setting, when the determination result indicates that the first MV and the second MV point to a same direction, the value of the BDOF flag corresponding to the current block to be a second set value, wherein
   the BDOF flag corresponding to the current block is set to be true when the value of the BDOF flag corresponding to the current block is the first set value, and the BDOF flag corresponding to the current block is set to be false when the value of the BDOF flag corresponding to the current block is the second set value.

4. The method of claim 3, wherein when determining whether the set condition is satisfied based on the first MV and the second MV to obtain the determination result, the method comprises:
   determining whether the first MV and the second MV point to the same direction according to a horizontal component of the first MV, a vertical component of the first MV, a horizontal component of the second MV and a vertical component of the second MV

5. The method of claim 4, wherein determining whether the first MV and the second MV point to the same direction according to the horizontal component of the first MV, the vertical component of the first MV, the horizontal component of the second MV and the vertical component of the second MV comprises:

   determining a first symbol value of the horizontal component of the first MV, a second symbol value of the vertical component of the first MV, a third symbol value of the horizontal component of the second MV and a fourth symbol value of the second MV; and
   determining that the first MV and the second MV point to different directions when one of the following conditions is satisfied, and determining that the first MV and the second MV point to the same direction when all of the following conditions are not satisfied:

   all of the first symbol value, the second symbol value, the third symbol value and the fourth symbol value are equal to 0;
   the first symbol value is different from the third symbol value, and the second symbol value is different from the fourth symbol value;
   both the first symbol value and the third symbol value are equal to 0, and the second symbol value is different from the fourth symbol value; or
   the first symbol value is different from the third symbol value, and both the second symbol value and the fourth symbol value are equal to 0.

6. The method of claim 4, wherein determining whether the first MV and the second MV point to the same direction according to the horizontal component of the first MV, the vertical component of the first MV, the horizontal component of the second MV and the vertical component of the second MV comprises:

   determining a first symbol value of the horizontal component of the first MV, a second symbol value of the vertical component of the first MV, a third symbol value of the horizontal component of the second MV and a fourth symbol value of the second MV; and

determining that the first MV and the second MV point to different directions when all of the following conditions are satisfied, and determining that the first MV and the second MV point to the same direction when any one of the following conditions is not satisfied:

a product of the first symbol value and the third symbol value is less than or equal to 0; or
a product of the second symbol value and the fourth symbol value is less than or equal to 0.

7. The method of claim 4, wherein determining whether the first MV and the second MV point to the same direction according to the horizontal component of the first MV, the vertical component of the first MV, the horizontal component of the second MV and the vertical component of the second MV comprises:
determining that the first MV and the second MV point to different directions when one of the following conditions is satisfied, and determining that the first MV and the second MV point to the same direction when all of the following conditions are not satisfied:

all of the horizontal component of the first MV, the vertical component of the first MV, the horizontal component of the second MV and the vertical component of the second MV are equal to 0;
the horizontal component of the first MV is unequal to the horizontal component of the second MV, and the vertical component of the first MV is unequal to the vertical component of the second MV;
the horizontal component of the first MV is unequal to the horizontal component of the second MV, and both the vertical component of the first MV and the vertical component of the second MV are equal to 0; or
both the horizontal component of the first MV and the horizontal component of the second MV are equal to 0, and the vertical component of the first MV is unequal to the vertical component of the second MV

8. The method of claim 4, wherein determining whether the first MV and the second MV point to the same direction according to the horizontal component of the first MV, the vertical component of the first MV, the horizontal component of the second MV and the vertical component of the second MV comprises:
determining that the first MV and the second MV point to different directions when all of the following conditions are satisfied, and determining that the first MV and the second MV point to the same direction when any one of the following conditions is not satisfied:

a product of the horizontal component of the first MV and the horizontal component of the second MV is less than or equal to 0; or
a product of the vertical component of the first MV and the vertical component of the second MV is less than or equal to 0.

9. The method of claim 3, wherein when determining whether the set condition is satisfied based on the first MV and the second MV to obtain the determination result, the method comprises:

determining that the first MV and the second MV point to different directions when the first MV is opposite to the second MV; and
determining that the first MV and the second MV point to the same direction when the first MV is not opposite to the second MV

10. The method of claim 9, further comprising:

determining a first symbol value of the horizontal component of the first MV, a second symbol value of the vertical component of the first MV, a third symbol value of the horizontal component of the second MV and a fourth symbol value of the second MV; and
determining that the first MV is opposite to the second MV when the first symbol value is unequal to the third symbol value and the second symbol value is unequal to the third symbol value.

11. The method of claim 9, further comprising:
determining that the first MV is opposite to the second MV when one of the first MV and the second MV is 0.

12. The method of claim 11, further comprising:

determining an included angle between the first MV and the second MV; and
determining that the first MV is opposite to the second MV when a direction the first MV points to is taken as a 0-degree direction and a value of the included angle is within a first set range,
a lower limit value of the first set range being greater than 90 degrees, and an upper limit value of the first set range being less than 270 degrees.

**13.** The method of claim 9 or 10 or 12, wherein when determining whether the set condition is satisfied based on the first MV and the second MV to obtain the determination result, the method comprises:

determining that the first MV and the second MV point to different directions when the first MV is opposite to the second MV and a magnitude of the first MV and a magnitude of the second MV satisfy a first magnitude condition; and
determining that the first MV and the second MV point to the same direction when the first MV is not opposite to the second MV or the magnitude of the first MV and the magnitude of the second MV do not satisfy the first magnitude condition.

**14.** The method of claim 13, further comprising:
determining that the magnitude of the first MV and the magnitude of the second MV satisfy the first magnitude condition when the magnitude of the first MV is equal to the magnitude of the second MV

**15.** The method of claim 13, further comprising:

determining that the magnitude of the first MV and the magnitude of the second MV satisfy the first magnitude condition when a first magnitude ratio is within a second set range,
the first magnitude ratio being determined based on the magnitude of the first MV and the magnitude of the second MV

**16.** The method of claim 15, further comprising:

determining the first magnitude ratio according to a ratio of a first magnitude to a second magnitude; and
determining that the first magnitude ratio is within the second set range when the first magnitude ratio is less than or equal to a first set ratio, wherein
the first magnitude is the greater in the magnitude of the first MV and the magnitude of the second MV, the second magnitude is the smaller in the magnitude of the first MV and the magnitude of the second MV, and the first set ratio is a real number greater than 1.

**17.** The method of claim 16, wherein the first set ratio is equal to 2.

**18.** The method of claim 3, wherein when determining whether the set condition is satisfied based on the first MV and the second MV to obtain the determination result, the method comprises:

determining a sum vector of a sum of the first MV and the second MV; and
determining that the first MV and the second MV point to different directions when one of the following conditions is satisfied, and determining that the first MV and the second MV point to the same direction when all of the following conditions are not satisfied:

both a horizontal component and a vertical component of the sum vector are equal to 0;
a magnitude of the sum vector is less than a first set magnitude;
a second magnitude ratio is less than a second set ratio, the second magnitude ratio being a ratio of the magnitude of the sum vector to a second magnitude, and the second magnitude being the smaller in a magnitude of the first MV and a magnitude of the second MV;
a ratio of the magnitude of the sum vector to a third magnitude is less than a third set ratio, the third magnitude being a sum of the magnitude of the first MV and the magnitude of the second MV;
a direction of the sum vector is the same as a direction of the first MV or a direction of the second MV;
the direction of the sum vector is the same as the direction of the first MV or the direction of the second MV, and the magnitude of the sum vector is less than a second set magnitude;
the direction of the sum vector is the same as the direction of the first MV or the direction of the second MV, and the second magnitude ratio is less than a fourth set ratio; or
the direction of the sum vector is the same as the direction of the first MV or the direction of the second MV, and the ratio of the magnitude of the sum vector to the third magnitude is less than a fifth set ratio.

**19.** The method of claim 5 or 6 or 10, further comprising:

determining a corresponding symbol value according to a value of a corresponding component, wherein
the corresponding symbol value is determined to be 1 when the value of the corresponding component is greater than 0;
the corresponding symbol value is determined to be 0 when the value of the corresponding component is equal to 0; and
the corresponding symbol value is determined to be -1 when the value of the corresponding component is less than 0.

**20.** The method of claim 1 or 2, wherein determining whether the set condition is satisfied based on the first MV and the second MV to obtain the determination result comprises:

determining a first reference block to which the first MV points and a second reference block to which the second MV points;
determining a difference block corresponding to a current sub-block, the difference block being determined based on corresponding pixels in the first reference block and corresponding pixels in the second reference block; and
determining whether the difference block satisfies the set condition to obtain the determination result;
setting the value of the BDOF flag according to the determination result comprises:

setting, when the determination result indicates whether the difference block satisfies the set condition, a value of a BDOF flag corresponding to the current sub-block to be a first set value; and
setting, when the determination result indicates whether the difference block satisfies the set condition, the value of the BDOF flag corresponding to the current sub-block to be a second set value; wherein
the BDOF flag corresponding to the current sub-block is set to be true when the value of the BDOF flag corresponding to the current sub-block is the first set value, and the BDOF flag corresponding to the current sub-block is set to be false when the value of the BDOF flag corresponding to the current sub-block is the second set value.

**21.** The method of claim 20, wherein determining the difference block corresponding to the current sub-block comprises:
determining the difference block based on a time gradient corresponding to pixels in the current sub-block.

**22.** The method of claim 21, wherein determining whether the difference block satisfies the set condition to obtain the determination result comprises:

determining a first maximum, the first maximum being a maximum within a range of the current sub-block in the difference block;
obtaining a determination result that the difference block satisfies the set condition when the first maximum is a third set value; and
obtaining a determination result that the difference block does not satisfy the set condition when the first maximum is not the third set value.

**23.** The method of claim 21, wherein determining whether the difference block satisfies the set condition to obtain the determination result comprises:

determining a second maximum, the second maximum being a maximum within a 6x4 pixel range corresponding to the current sub-block in the difference block;
obtaining a determination result that the difference block satisfies the set condition when the second maximum is a third set value; and
obtaining a determination result that the difference block does not satisfy the set condition when the second maximum is not the third set value.

**24.** The method of claim 21, wherein determining whether the difference block satisfies the set condition to obtain the determination result comprises:

obtaining a determination result that the difference block satisfies the set condition when a sum of differences within a range of the current sub-block in the difference block is a third set value; and

obtaining a determination result that the difference block does not satisfy the set condition when the sum of the differences within the range of the current sub-block in the difference block is not the third set value.

25. The method of claim 21, wherein determining whether the difference block satisfies the set condition to obtain the determination result comprises:

obtaining a determination result that the difference block satisfies the set condition when a sum of differences within a 6x4 pixel range corresponding to the current sub-block in the difference block is a third set value; and obtaining a determination result that the difference block does not satisfy the set condition when the sum of the differences within the 6x4 pixel range corresponding to the current sub-block in the difference block is not the third set value.

26. The method of any one of claims 22-25, wherein the third set value is 0.

27. The method of claim 20, wherein determining the difference block corresponding to the current sub-block comprises: performing subtraction on corresponding pixels in the first reference block and the second reference block to obtain the difference block.

28. The method of claim 27, wherein determining whether the difference block satisfies the set condition to obtain the determination result comprises:

determining a first absolute maximum, the first absolute maximum being an absolute maximum within a range of the current sub-block in the difference block; obtaining a determination result that the difference block satisfies the set condition when the first absolute maximum is less than a fourth set value; and obtaining a determination result that the difference block does not satisfy the set condition when the first absolute maximum is more than or equal to the fourth set value.

29. The method of claim 27, wherein determining whether the difference block satisfies the set condition to obtain the determination result comprises:

determining a second absolute maximum, the second maximum being an absolute maximum within a 6x6 pixel range corresponding to the current sub-block in the difference block; obtaining a determination result that the difference block satisfies the set condition when the second absolute maximum is less than a fourth set value; and obtaining a determination result that the difference block does not satisfy the set condition when the second absolute maximum is more than or equal to the fourth set value.

30. The method of claim 28 or 29, wherein the fourth set value is 16.

31. An inter prediction method, applied to a decoder and comprising:

determining a first Motion Vector, MV, and a second MV of a current block, the first MV being a forward MV of the current block, and the second MV being a backward MV of the current block; determining whether a set condition is satisfied based on the first MV and the second MV to obtain a determination result; setting a value of a Bi-directional Optical Flow Prediction, BDOF, flag according to the determination result; and determining an inter prediction value of the current block or at least one sub-block in the current block based on the value of the BDOF flag.

32. The method of claim 31, wherein determining the first MV and the second MV of the current block comprises:

parsing a video bitstream to obtain a motion information index of the current block in a Merges mode; selecting corresponding motion information from a motion information candidate list corresponding to the current block according to the motion information index; and determining the first MV and the second MV from the selected motion information.

33. The method of claim 31 or 32, wherein setting the value of the BDOF flag according to the determination result comprises:

setting, when the determination result indicates that the first MV and the second MV point to different directions, the value of the BDOF flag corresponding to the current block to be a first set value; and

setting, when the determination result indicates that the first MV and the second MV point to a same direction, the value of the BDOF flag corresponding to the current block to be a second set value; and

determining the inter prediction value of the current block or at least one sub-block in the current block based on the value of the BDOF flag comprises:

determining, when the value of the BDOF flag corresponding to the current block is the first set value, the inter prediction value of the current block based on BDOF; and

determining, when the value of the BDOF flag corresponding to the current block is the second set value, the inter prediction value of the current block according to the first MV and the second MV

34. The method of claim 33, wherein when determining whether the set condition is satisfied based on the first MV and the second MV to obtain the determination result, the method comprises:
determining whether the first MV and the second MV point to the same direction according to a horizontal component of the first MV, a vertical component of the first MV, a horizontal component of the second MV and a vertical component of the second MV

35. The method of claim 34, wherein determining whether the first MV and the second MV point to the same direction according to the horizontal component of the first MV, the vertical component of the first MV, the horizontal component of the second MV and the vertical component of the second MV comprises:

determining a first symbol value of the horizontal component of the first MV, a second symbol value of the vertical component of the first MV, a third symbol value of the horizontal component of the second MV and a fourth symbol value of the second MV; and

determining that the first MV and the second MV point to different directions when one of the following conditions is satisfied, and determining that the first MV and the second MV point to the same direction when all of the following conditions are not satisfied:

all of the first symbol value, the second symbol value, the third symbol value and the fourth symbol value are 0;

the first symbol value is different from the third symbol value, and the second symbol value is different from the fourth symbol value;

both the first symbol value and the third symbol value are equal to 0, and the second symbol value is different from the fourth symbol value; or

the first symbol value is different from the third symbol value, and both the second symbol value and the fourth symbol value are equal to 0.

36. The method of claim 34, wherein determining whether the first MV and the second MV point to the same direction according to the horizontal component of the first MV, the vertical component of the first MV, the horizontal component of the second MV and the vertical component of the second MV comprises:

determining a first symbol value of the horizontal component of the first MV, a second symbol value of the vertical component of the first MV, a third symbol value of the horizontal component of the second MV and a fourth symbol value of the second MV; and

determining that the first MV and the second MV point to different directions when all of the following conditions are satisfied, and determining that the first MV and the second MV point to the same direction when any one of the following conditions is not satisfied:

a product of the first symbol value and the third symbol value is less than or equal to 0; or

a product of the second symbol value and the fourth symbol value is less than or equal to 0.

37. The method of claim 34, wherein determining whether the first MV and the second MV point to the same direction according to the horizontal component of the first MV, the vertical component of the first MV, the horizontal component of the second MV and the vertical component of the second MV comprises:
determining that the first MV and the second MV point to different directions when one of the following conditions is satisfied, and determining that the first MV and the second MV point to the same direction when all of the following conditions are not satisfied:

all of the horizontal component of the first MV, the vertical component of the first MV, the horizontal component of the second MV and the vertical component of the second MV are equal to 0;
the horizontal component of the first MV is unequal to the horizontal component of the second MV, and the vertical component of the first MV is unequal to the vertical component of the second MV;
the horizontal component of the first MV is unequal to the horizontal component of the second MV, and both the vertical component of the first MV and the vertical component of the second MV are equal to 0; or
both the horizontal component of the first MV and the horizontal component of the second MV are equal to 0, and the vertical component of the first MV is unequal to the vertical component of the second MV

38. The method of claim 34, wherein determining whether the first MV and the second MV point to the same direction according to the horizontal component of the first MV, the vertical component of the first MV, the horizontal component of the second MV and the vertical component of the second MV comprises:
determining that the first MV and the second MV point to different directions when all of the following conditions are satisfied, and determining that the first MV and the second MV point to the same direction when any one of the following conditions is not satisfied:

a product of the horizontal component of the first MV and the horizontal component of the second MV is less than or equal to 0; or
a product of the vertical component of the first MV and the vertical component of the second MV is less than or equal to 0.

39. The method of claim 33, wherein when determining whether the set condition is satisfied based on the first MV and the second MV to obtain the determination result, the method comprises:

determining that the first MV and the second MV point to different directions when the first MV is opposite to the second MV; and
determining that the first MV and the second MV point to the same direction when the first MV is not opposite to the second MV

40. The method of claim 39, further comprising:

determining a first symbol value of the horizontal component of the first MV, a second symbol value of the vertical component of the first MV, a third symbol value of the horizontal component of the second MV and a fourth symbol value of the second MV; and
determining that the first MV is opposite to the second MV when the first symbol value is unequal to the third symbol value and the second symbol value is unequal to the third symbol value.

41. The method of claim 39, further comprising:
determining that the first MV is opposite to the second MV when one of the first MV and the second MV is 0.

42. The method of claim 41, further comprising:

determining an included angle between the first MV and the second MV; and
determining that the first MV is opposite to the second MV when a direction the first MV points to is taken as a 0-degree direction and a value of the included angle is within a first set range,
a lower limit value of the first set range being greater than 90 degrees, and an upper limit value of the first set range being less than 270 degrees.

43. The method of claim 39 or 40 or 42, wherein when determining whether the set condition is satisfied based on the first MV and the second MV to obtain the determination result, the method comprises:

determining that the first MV and the second MV point to different directions when the first MV is opposite to the second MV and a magnitude of the first MV and a magnitude of the second MV satisfy a first magnitude condition; and
determining that the first MV and the second MV point to the same direction when the first MV is not opposite to the second MV or the magnitude of the first MV and the magnitude of the second MV do not satisfy the first magnitude condition.

44. The method of claim 43, further comprising:
determining that the magnitude of the first MV and the magnitude of the second MV satisfy the first magnitude condition when the magnitude of the first MV is equal to the magnitude of the second MV

45. The method of claim 43, further comprising:

determining that the magnitude of the first MV and the magnitude of the second MV satisfy the first magnitude condition when a first magnitude ratio is within a second set range,
the first magnitude ratio being determined based on the magnitude of the first MV and the magnitude of the second MV.

46. The method of claim 45, further comprising:

determining the first magnitude ratio according to a ratio of a first magnitude to a second magnitude; and
determining that the first magnitude ratio is within the second set range when the first magnitude ratio is less than or equal to a first set ratio, wherein
the first magnitude is the greater in the magnitude of the first MV and the magnitude of the second MV, the second magnitude is the smaller in the magnitude of the first MV and the magnitude of the second MV, and the first set ratio is a real number greater than 1.

47. The method of claim 46, wherein the first set ratio is equal to 2.

48. The method of claim 33, wherein when determining whether the set condition is satisfied based on the first MV and the second MV to obtain the determination result, the method comprises:

determining a sum vector of a sum of the first MV and the second MV; and
determining that the first MV and the second MV point to different directions when one of the following conditions is satisfied, and determining that the first MV and the second MV point to the same direction when all of the following conditions are not satisfied:

both a horizontal component and a vertical component of the sum vector are equal to 0;
a magnitude of the sum vector is less than a first set magnitude;
a second magnitude ratio is less than a second set ratio, the second magnitude ratio being a ratio of the magnitude of the sum vector to a second magnitude, and the second magnitude being the smaller in a magnitude of the first MV and a magnitude of the second MV;
a ratio of the magnitude of the sum vector to a third magnitude is less than a third set ratio, the third magnitude being a sum of the magnitude of the first MV and the magnitude of the second MV;
a direction of the sum vector is the same as a direction of the first MV or a direction of the second MV;
the direction of the sum vector is the same as the direction of the first MV or the direction of the second MV, and the magnitude of the sum vector is less than a second set magnitude;
the direction of the sum vector is the same as the direction of the first MV or the direction of the second MV, and the second magnitude ratio is less than a fourth set ratio; or
the direction of the sum vector is the same as the direction of the first MV or the direction of the second MV, and the ratio of the magnitude of the sum vector to the third magnitude is less than a fifth set ratio.

49. The method of claim 35 or 36 or 40, further comprising:

determining a corresponding symbol value according to a value of a corresponding component, wherein
the corresponding symbol value is determined to be 1 when the value of the corresponding component is greater than 0;
the corresponding symbol value is determined to be 0 when the value of the corresponding component is equal to 0; and
the corresponding symbol value is determined to be -1 when the value of the corresponding component is less than 0.

50. The method of claim 31 or 32, wherein determining whether the set condition is satisfied based on the first MV and the second MV to obtain the determination result comprises:

determining a first reference block to which the first MV points and a second reference block to which the second MV points;
determining a difference block corresponding to a current sub-block, the difference block being determined based on corresponding pixels in the first reference block and corresponding pixels in the second reference block, and
determining whether the difference block satisfies the set condition to obtain the determination result;
setting the value of the BDOF flag according to the determination result comprises:

setting a value of a BDOF flag corresponding to the current sub-block according to the determination result;
determining the inter prediction value of the current block or at least one sub-block in the current block based on the value of the BDOF flag comprises:

determining, when the value of the BDOF flag corresponding to the current sub-block is a first set value, the inter prediction value of the current sub-block based on BDOF; and
determining, when the value of the BDOF flag corresponding to the current block is a second set value, the inter prediction value of the current sub-block according to the first MV and the second MV

51. The method of claim 50, wherein determining the difference block corresponding to the current sub-block comprises: determining the difference block based on a time gradient corresponding to pixels in the current sub-block.

52. The method of claim 51, wherein setting the value of the BDOF flag corresponding to the current sub-block according to the determination result comprises:

determining a first maximum, the first maximum being a maximum within a range of the current sub-block in the difference block; and
setting the value of the BDOF flag corresponding to the current sub-block to be the second set value when the determination result indicates that the first maximum is a third set value.

53. The method of claim 51, wherein setting the value of the BDOF flag corresponding to the current sub-block according to the determination result comprises:

determining a second maximum, the second maximum being a maximum within a 6x4 pixel range corresponding to the current sub-block in the difference block; and
setting the value of the BDOF flag corresponding to the current sub-block to be the second set value when the determination result indicates that the second maximum is a third set value.

54. The method of claim 51, wherein setting the value of the BDOF flag corresponding to the current sub-block according to the determination result comprises:
setting the value of the BDOF flag corresponding to the current sub-block to be the second set value when the determination result indicates that a sum of differences within a range of the current sub-block in the difference block is a third set value.

55. The method of claim 51, wherein setting the value of the BDOF flag corresponding to the current sub-block according to the determination result comprises:
setting the value of the BDOF flag corresponding to the current sub-block to be the second set value when the determination result indicates that a sum of differences within a 6x4 pixel range corresponding to the current sub-block in the difference block is a third set value.

56. The method of any one of claims 52-55, wherein the third set value is 0.

57. The method of claim 50, wherein determining the difference block corresponding to the current sub-block comprises: performing subtraction on corresponding pixels in the first reference block and the second reference block to obtain the difference block.

58. The method of claim 57, wherein setting the value of the BDOF flag corresponding to the current sub-block according to the determination result comprises:

determining a first absolute maximum, the first absolute maximum being an absolute maximum within a range of the current sub-block in the difference block; and

setting the value of the BDOF flag corresponding to the current sub-block to be the second set value when the determination result indicates that the first absolute maximum is less than a fourth set value.

59. The method of claim 57, wherein setting the value of the BDOF flag corresponding to the current sub-block according to the determination result comprises:

determining a second absolute maximum, the second maximum being an absolute maximum within a 6x6 pixel range corresponding to the current sub-block in the difference block; and

setting the value of the BDOF flag corresponding to the current sub-block to be the second set value when the determination result indicates that the second absolute maximum is less than a fourth set value.

60. The method of claim 58 or 59, wherein the fourth set value is 16.

61. An encoder, comprising:

a first determination unit, configured to determine a first Motion Vector, MV, and a second MV of a current block, the first MV being a forward MV of the current block, and the second MV being a backward MV of the current block;

a first judgment unit, configured to determine whether a set condition is satisfied based on the first MV and the second MV to obtain a determination result;

a first setting unit, configured to set a value of a Bi-directional Optical Flow Prediction, BDOF, flag according to the determination result; and

a first prediction unit, configured to determine an inter prediction value of the current block or at least one sub-block in the current block based on the value of the BDOF flag.

62. A decoder, comprising:

a second determination unit, configured to determine a first Motion Vector, MV, and a second MV of a current block, the first MV being a forward MV of the current block, and the second MV being a backward MV of the current block;

a second judgment unit, configured to determine whether a set condition is satisfied based on the first MV and the second MV to obtain a determination result;

a second setting unit, configured to set a value of a Bi-directional Optical Flow Prediction, BDOF, flag according to the determination result; and

a second prediction unit, configured to determine an inter prediction value of the current block or at least one sub-block in the current block based on the value of the BDOF flag.

63. An encoder, comprising a first processor and a first memory configured to store a computer program capable of running in the processor,

wherein the first processor is configured to run the computer program to execute operations of the method of any one of claims 1-30.

64. A decoder, comprising a second processor and a second memory configured to store a computer program capable of running in the processor,

wherein the second processor is configured to run the computer program to execute operations of the method of any one of claims 31-60.

65. A storage medium, having a computer program stored thereon, the computer program being executed by a processor to implement operations of the method of any one of claims 1-30, or,

the computer program being executed by the processor to implement operations of the method of any one of claims 31-60.

FIG. 1

FIG. 2

Inputting a video

Partitioning into coding blocks

10

101

Transformation and quantization unit

Quantized transformation coefficient

106

Inverse transformation and inverse quantization unit

107

102

Intra estimation unit

Filter control analysis unit

Filter control data

109

Coding unit

Outputting a bitstream

103

Inter/Intra selection

Intra prediction unit

108

Filtering unit

Intra predicted data

104

Motion compensation unit

Motion data

105

Motion estimation unit

110

Decoded picture buffer unit

Outputting a video signal

**FIG. 3A**

FIG. 3B

Determining a first MV and a second MV of a current block — 401

Determining whether a set condition is satisfied based on the first MV and the second MV to obtain a determination result — 402

Setting a value of a BDOF flag according to the determination result — 403

Determining an inter prediction value of the current block or at least one sub-block in the current block based on the value of the BDOF flag — 404

**FIG. 4**

Performing motion estimation on the current block to determine the first MV and the second MV of the current block — 4011

Determining whether a set condition is satisfied based on the first MV and the second MV to obtain a determination result — 402

Setting a value of a BDOF flag according to the determination result — 403

Determining an inter prediction value of the current block or at least one sub-block in the current block based on the value of the BDOF flag — 404

**FIG. 5A**

Parsing a video bitstream to obtain a motion information index of the current block in a Merges mode — 4012

Selecting corresponding motion information from a motion information candidate list corresponding to the current block according to the motion information index — 4013

Determining the first MV and the second MV from the selected motion information — 4014

Determining whether a set condition is satisfied based on the first MV and the second MV to obtain a determination result — 402

Setting a value of a BDOF flag according to the determination result — 403

Determining an inter prediction value of the current block or at least one sub-block in the current block based on the value of the BDOF flag — 404

**FIG. 5B**

Determining a first MV and a second MV of a current block — 401

Determining whether a set condition is satisfied based on the first MV and the second MV to obtain a determination result — 402

Setting a value of a BDOF flag corresponding to the current block to be a first set value when the determination result indicates that the first MV and the second MV point to different directions — 4031

Setting the value of the BDOF flag corresponding to the current block to be a second set value when the determination result indicates that the first MV and the second MV point to the same direction — 4032

Determining an inter prediction value of the current block or at least one sub-block in the current block based on the value of the BDOF flag — 404

**FIG. 6**

Determining a first MV and a second MV of a current block — 401

Determining a first reference block to which the first MV points and a second reference block to which the second MV points — 4021

Determining a difference block corresponding to a current sub-block — 4022

Determining whether the difference block satisfies the set condition to obtain a determination result — 4023

Setting a value of a BDOF flag corresponding to the current sub-block to be a first set value when the determination result indicates whether the difference block satisfies the set condition — 4033

Setting the value of the BDOF flag corresponding to the current sub-block to be a second set value when the determination result indicates whether the difference block satisfies the set condition — 4034

Determining an inter prediction value of the current block or at least one sub-block in the current block based on the value of the BDOF flag — 404

**FIG. 7**

100

First determination unit ——— 1001

First judgment unit ——— 1002

First setting unit ——— 1003

First prediction unit ——— 1004

Encoder

**FIG. 8**

200

Second determination unit — 2001

Second judgment unit — 2002

Second setting unit — 2003

Second prediction unit — 2004

Decoder

**FIG. 9**

100

1005 First communication interface 1007

1008

First memory

1006 First processor

Encoder

**FIG. 10**

200

2005

Second
communication
interface

2007

2008

Second
memory

2006

Second
processor

Decoder

## FIG. 11

## INTERNATIONAL SEARCH REPORT

| International application No. |
|---|
| **PCT/CN2019/130131** |

| A. | CLASSIFICATION OF SUBJECT MATTER |
|---|---|
| | H04N 19/52(2014.01)i |

According to International Patent Classification (IPC) or to both national classification and IPC

| B. | FIELDS SEARCHED |
|---|---|

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

WPI, EPODOC, CNKI, CNPAT, ITU, IEEE, JVET: BDOF, bi-directional, optical, flow, predict+, motion, vector, forward, backward, direction, flag, true, false, luma, gradient, SAD, inter-frame, point+, 双向, 光流, 预测, 运动矢量, 指向, 方向, 前向, 后向, 标志位, 真, 假, 梯度, 时间, 亮度, 残差, 差, 帧间, 编码, 解码

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CHEN, Haunbang et al. "CE9: Implicit splitting of BDOF application region (CE9-2.4 and CE9-2.6)" *Joint Video Experts Team (JVET) of ITU-T SG 16 WP 3 and ISO/IEC JTC 1/SC 29/WG 11,* 27 March 2019 (2019-03-27), pp. 1-6 | 1-4, 9, 11, 12, 20, 21, 27, 31-34, 39, 41, 42, 50, 51, 57, 61-65 |
| A | CHEN, Jianle et al. "Algorithm description for Versatile Video Coding and Test Model 5 (VTM 5)" *Joint Video Experts Team (JVET) of ITU-T SG 16 WP 3 and ISO/IEC JTC 1/SC 29/WG 11,* 27 March 2019 (2019-03-27), entire document | 1-65 |
| A | YU, Ruoyang et al. "Non-CE9:On motion refinement parameter derivation in BDOF" *Joint Video Experts Team (JVET) of ITU-T SG 16 WP 3 and ISO/IEC JTC 1/SC 29/WG 11,* 27 March 2019 (2019-03-27), entire document | 1-65 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 September 2020** | **27 September 2020** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/130131** |

**C.    DOCUMENTS CONSIDERED TO BE RELEVANT**

| Category* | Citation of document, with indication, where appropriate, of the relevant passages | Relevant to claim No. |
| --- | --- | --- |
| A | CHUJOH, Takeshi et al. "CE9-related:Simplification of BDOF"<br>*Joint Video Experts Team (JVET) of ITU-T SG 16 WP 3 and ISO/IEC JTC 1/SC 29/WG 11,*<br>27 March 2019 (2019-03-27),<br>    entire document | 1-65 |
| A | XIU, Xiaoyu et al. "CE9-related:Improvements on bi-directional optical flow(BDOF)"<br>*Joint Video Experts Team (JVET) of ITU-T SG 16 WP 3 and ISO/IEC JTC 1/SC 29/WG 11,*<br>27 March 2019 (2019-03-27),<br>    entire document | 1-65 |
| A | BROSS, Benjamin et al. "Versatile Video Coding (Draft 2)"<br>*Joint Video Experts Team (JVET) of ITU-T SG 16 WP 3 and ISO/IEC JTC 1/SC 29/WG 11,*<br>18 July 2018 (2018-07-18),<br>    entire document | 1-65 |
| A | CN 105517671 A (PEKING UNIVERSITY SHENZHEN GRADUATE SCHOOL) 20 April 2016 (2016-04-20)<br>    entire document | 1-65 |

Form PCT/ISA/210 (second sheet) (January 2015)

**INTERNATIONAL SEARCH REPORT**
Information on patent family members

International application No.

**PCT/CN2019/130131**

| Patent document cited in search report | | | Publication date (day/month/year) | Patent family member(s) | | | Publication date (day/month/year) |
|---|---|---|---|---|---|---|---|
| CN | 105517671 | A | 20 April 2016 | US | 2018176574 | A1 | 21 June 2018 |
| | | | | WO | 2016187776 | A1 | 01 December 2016 |

Form PCT/ISA/210 (patent family annex) (January 2015)